# EUROPÄISCHE PATENTSCHRIFT

(11) **EP 0 728 649 B1**
(45) Veröffentlichungstag und Bekanntmachung des Hinweises auf die Patenterteilung: **04.08.1999**
(21) Anmeldenummer: 96890021.7
(22) Anmeldetag: 13.02.1996
(51) Int. Cl.: B61D 17/02, B62D 25/12

(54) **Einrichtung zur Betätigung einer Abdeckung**
Device for operating a cover
Dispositif pour commander un couvercle

(30) Priorität: 15.02.1995 AT 27195
(43) Veröffentlichungstag der Anmeldung: 28.08.1996
(73) Patentinhaber: BOMBARDIER-WIEN SCHIENENFAHRZEUGE AKTIENGESELLSCHAFT, A-1211 Wien (AT)
(72) Erfinder: Kozak, Franz, A-1020 Wien (AT); Petz, Michael, Dr. Dipl.-Ing., A-2102 Bisamberg (AT); Poisinger, Josef, A-1210 Wien (AT); Stengg, Werner, Dipl.-Ing., A-2380 Perchtoldsdorf (AT); Wollendorfer, Reinhard, Dipl.-Ing., A-1030 Wien (AT); Hösl, Dieter, A-2512 Tribuswinkel (AT); Neckhaim, Ernst, Dipl.-Ing., A-1230 Wien (AT); Königsreiter, Günter, Dipl.-Ing., A-1160 Wien (AT)
(74) Vertreter: Casati, Wilhelm, Dipl.-Ing.

(56) Entgegenhaltungen:
- EP-A- 0 348 930
- EP-A- 0 376 351
- DE-A- 4 300 393
- FR-A- 857 108
- GB-A- 2 083 545

## Beschreibung

Die Erfindung betrifft eine Einrichtung zur schwenkbaren Befestigung und Betätigung einer Abdeckung, insbesondere einer Schürze für die Öffnung eines Raumes, insbesondere einer Öffnung in der Wand, z.B. der Stirnwand, eines Fahrzeuges, vorzugsweise eines Straßen- oder Stadtbahnfahrzeuges, wobei die Abdeckung schwenkbar an einer Schwinge, insbesondere an einem Ende der Schwinge, gelagert ist und die Schwinge ihrerseits, insbesondere an ihrem anderen Ende, schwenkbar in einem bezüglich des Raumes ortsfesten, z.B. an einem Rahmenholm des Fahrzeuges angeordneten Lager, gelagert ist, wobei weiters mit der Abdeckung ein Hebel verbunden ist, an dem der Antrieb zur Betätigung der Abdeckung angreift, der bevorzugt von einer Antriebskurbel gebildet ist, die in einem bezüglich des Raumes ortsfesten, z.B. an einem Rahmenholm des Fahrzeuges angeordneten Hauptlager, schwenkbar gelagert ist.

Bei Straßenbahnfahrzeugen und Stadtbahnfahrzeugen, welche zumindest teilweise am öffentlichen Straßenverkehr teilnehmen, stellt eine vorspringende Kupplung sowie der durch den Schwenkbereich dieser Kupplung vorzusehende offene Raum an der Stirnseite des Fahrzeuges eine Erhöhung des Verletzungsrisikos bei Fußgängerkollision dar. Ebenso bei Unfällen mit Fahrzeugen des Individualverkehrs mit gereingerer Masse (z.B.PKW).

Bei Einrichtungen der eingangs erwähnten Art (GB-A-2083545) wurde es bekannt, den Hebel, der mit der Abdeckung verbunden ist und an dem der Antrieb angreift, mit einem Schlitz zu versehen und ihn schwenkbar an der Abdeckung zu lagern. In den Schlitz greift ein ortsfest gehaltener Bolzen ein. Wird die Antriebskurbel gedreht, so gleitet der Schlitz und damit auch der Hebel, der bei der bekannten Ausführung schwenkbar mit der Abdeckung verbunden ist, den ortsfest gehaltenen Bolzen entlang und schwenkt gleichzeitig uni diesen Bolzen und den Kurbelzapfen, der den Hebel mit der Antriebskurbel verbindet. Von Anbeginn der Drehung der Antriebskurbel wird dabei auch die Schwinge verschwenkt und damit auch jenes Ende der Abdeckung, an dem die Schwinge schwenkbar gelagert ist. Die Bewegung der Abdeckung entspricht bei der bekannten Einrichtung im wesentlichen der Bewegung der Koppel eines Gelenksparallelogrammes, in dem die Schwinge eine der beiden Kurbeln bildet. Bei einer derartigen Bewegung hebt die Abdeckung nur geringfügig von der Öffnung ab, was in der Anfangsphase der Bewegung Schwierigkeiten beim Abheben der Dichtungen der Abdeckung, die in die Öffnung eingreift, verursachen kann.

Der Erfindung liegt nun die Aufgabe zugrunde, eine Abdeckung für den Raum zu schaffen und eine Steuerung für diese Abdeckung anzugeben, die es ermöglicht, daß die Abdeckung den Raum freigibt, sobald es erforderlich wird, die Kupplung aus dem Fahrzeug über die Stirnseite auszufahren, ohne daß Schwierigkeiten beim Abheben der Abdeckung von der Öffnung entstehen.

Die Erfindung soll jedoch nicht auf Abdeckungen an Straßen- oder Stadtbahnfahrzeugen beschränkt sein, sondern soll vielmehr auch dort anwendbar sein, wo an der Außenwand eine Öffnung zu einem Raum abzudecken ist, in welchem sich Elemente befinden, die aus der Raumöffnung herausbewegt werden müssen oder aber über die Raumöffnung von außen zugänglich zu halten sind.

Die Erfindung schlägt zur Erreichung des vorgenannten Zieles bei einer Einrichtung der eingangs erwähnten Art vor, daß erfindungsgemäß der Hebel mit der Abdeckung starr verbunden ist und dieser Hebel oder ein an dem Hebel angelenkter, mit dem Antrieb verbundener Koppelhebel mit einem Mitnehmerzapfen versehen ist und die Bahn des Mitnehmerzapfens die Schwinge, an der die Abdeckung schwenkbar gelagert ist, schneidet, wodurch nach Auftreffen des Mitnehmerzapfens auf die Schwinge die Schwinge um ihr bezüglich des Raumes ortsfestes Lager gemeinsam mit der Abdeckung durch die Bewegung des Mitnehmerzapfens verschwenkt wird. Durch die erfindungsgemäße Ausgestaltung der Einrichtung wird es ermöglicht, durch Verschwenken der Abdeckung zunächst die Abdeckung von der Öffnung wegzukippen und hierauf dann die Abdeckung in ihrer gekippten Lage hochzuschwenken und so die Raumöffnung freizumachen, die Abdeckung jedoch mit dem Fahrzeug verbunden zu halten, wobei dadurch, daß die Abdeckung von der Fahrzeugwand abgehoben wird, eine Beschädigung dieser Wand bei Bewegung der Abdeckung vermieden wird.

Der Antrieb kann etwa über ein Kolben/Zylinderaggregat erfolgen, dessen Kolben an einem mit der Antriebskurbel verbundenen Hebel angreift. Der Zylinder des Aggregates kann dabei schwenkbar am Rahmen des Fahrzeuges gelagert sein.

Eine besonders für Straßen- bzw. Stadtbahnfahrzeuge zu bevorzugende Ausgestaltung der erfindungsgemäßen Einrichtung, bei der das ortsfeste Hauptlager der Antriebskurbel näher zur Öffnung des durch die Schürze zu verschließenden Raumes angeordnet ist, als das ortsfeste Hauptlager der Schwinge, an der die Abdeckung schwenkbar gelagert ist, zeichnet sich dadurch aus, daß in der Schließstellung der Abdeckung der Mitnehmerzapfen unterhalb der Schwinge, von dieser beabstandet, angeordnet ist und daß gegebenenfalls das Lager, über welches der Koppelhebel an der Antriebskurbel angelenkt ist, oberhalb der Schwinge angeordnet ist. Diese Ausgestaltung ermöglicht eine einwandfreie Unterbringung der Kinematik innerhalb jenes Raumes, in dem auch die Kupplung bzw. deren Gestänge schwingt.

Bei Straßen- oder Stadtbahnfahrzeugen, bei deren Bewegung in einem S-Bogen der Gleisanlage große horizontale Schwenkwinkel der Kupplung bei miteinander gekuppelten Fahrzeugen auftreten, kann in besonderer Ausgestaltung der Erfindung vorgesehen werden, daß aus den Seitenwänden des Fahrzeuges, im Bereich der Schwenkbahn einer in dem von der Schürze verschließbaren Raum gelagerten Kupplung Flügel schwenkbar, insbesondere um eine vertikale Scharnierachse, ausdrehbar sind und daß gegebenenfalls die Flügel unter dem Einfluß einer Feder in der Geschlossenstellung, in welcher sie mit den Seitenwänden des Fahrzeuges fluchten, gehalten sind, und daß bevorzugt durch Anlaufen der Kupplung an die Flügeln, diese aus ihrer Geschlossenstellung ausschwenkbar sind.

Die Erfindung wird nachstehend anhand der Zeichnung näher erläutert. Es zeigt,
Fig. 1 in Seitenansicht den Vorderteil eines Straßenbahnfahrzeuges mit der Steuereinrichtung für die Abdeckung,
Fig. 2 eine Draufsicht auf die Anordnung aus Fig. 1, Fig. 3 die Einrichtung gemäß Fig. 1 in einer Zwischenlage beim Betätigen der Abdeckung, und
Fig. 3 eine ebenfalls der Fig. 1 entsprechende Darstellung, jedoch bei hochgeschwenkter Abdeckung und damit freigegebener Öffnung des durch die Abdeckung verschließbaren Raumes.

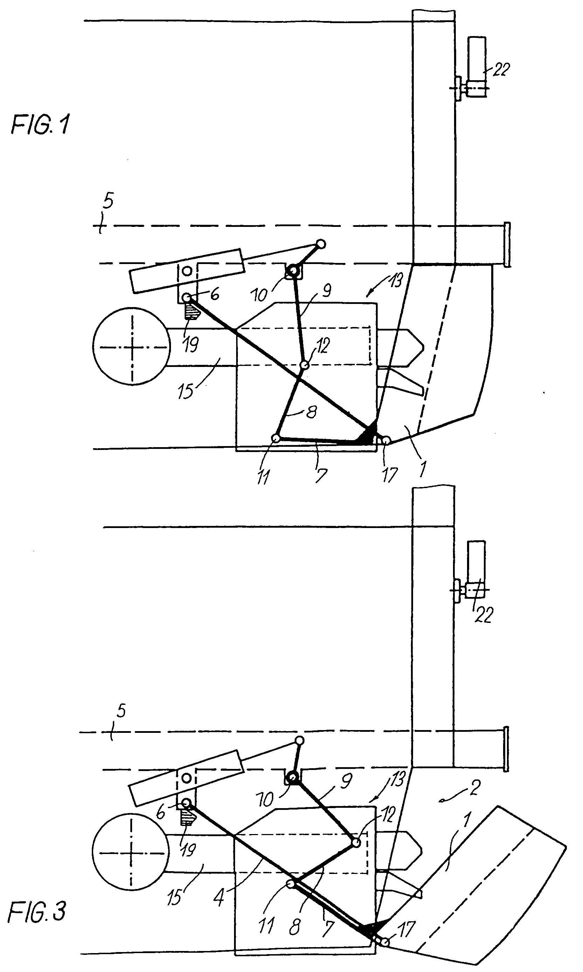

In der Zeichnung ist mit 1 eine Abdeckung bezeichnet, die dazu dient, die Öffnung eines Raumes vorübergehend zu verschließen. Im dargestellten Ausführungsbeispiel handelt es sich dabei um die Öffnung in der Stirnwand eines Straßenbahn- bzw. Stadtbahnfahrzeuges. In dem durch die Abdeckung 1 temporär verschließbaren Raum ist eine Kupplung 13 angeordnet, von der jedoch in der Zeichnung lediglich der Umriß dargestellt ist. Die Kupplung weist einen Vorderteil 14 und eine Tragstange 15 auf, die schwenkbar am Fahrzeugrahmen verankert ist. Die Kupplungsteile 14 und 15 können um eine (nicht dargestellte) vertikale Achse schwenkbar miteinander verbunden und in der gestreckten Lage gegeneinander verriegelbar sein, sodaß die Kupplung durch Schwenken um diese Achse zur Gänze in den Raum eingeklappt werden kann, der dann durch die Abdeckung 1, die als Schürze ausgebildet ist, verschlossen werden kann, wie dies aus Fig. 1 ersichtlich ist. Es ist auch möglich, den Vorderteil 14 der Kupplung 13 gleitbar, teleskopartig an der Tragstange 15 zu lagern, wie dies in den Zeichnungen als Beispiel dargestellt ist.

Die Abdeckung 1 ist an einer Schwinge 4 schwenkbar gelagert. Das Schwenklager 17 für die Abdeckung 1 befindet sich dabei an einem Ende der Schwinge 4. Die Schwinge 4 ist an ihrem anderen Ende in einem Lager 6 schwenkbar gelagert. Da auf der Schwinge 4 das Gesamtgewicht der Abdeckung 1 lagert, wodurch auf die Schwinge 4 ein Moment ausgeübt wird, das im dargestellten Ausführungsbeispiel im Drehsinn des Uhrzeigers wirkt, ist für die Schwinge 4 ein ortsfester Anschlag 19 vorgesehen, der die Schwenkung der Schwinge 4 im Uhrzeigersinn begrenzt.

Um die beiden Schwenkbewegungen der Abdeckung 1 von einem einzigen Antrieb aus auszuführen, wurde die Kinematik so ausgestaltet, daß die Schwingkurbel 7 der Abdeckung 1 bzw. der an der Schwingkurbel 7 angelenkte Koppelhebel 8 mit einem Mitnehmerzapfen 11 für die Schwinge versehen ist. Im dargestellten Ausführungsbeispiel ist der Mitnehmerzapfen 11 koaxial zur Schwenkachse des an der Schwingkurbel 7 angeordneten Lagers für den Koppelhebel 8 angeordnet. Die Bahn des Mitnehmerzapfens 11 der Schwinge 4 schneidet die Schwinge 4, d.h. die Schwinge 4 kommt, nachdem die Schwingkurbel 7 mit ihrem vorgegebenen Schwenkwinkel verschwenkt wurde, zur Anlage an den Mitnehmerzapfen, sodaß durch die weitere Bewegung des Mitnehmerzapfens 11 die Schwinge mit verschwenkt wird, wobei bei dieser Schwenkbewegung die Abdeckung ihre Relativlage zur Schwinge 4 beibehält.

Wie aus der Zeichnung ersichtlich, ist das ortsfeste Hauptlager 10 der Antriebskurbel 9 näher zur Öffnung 2 des durch die Schürze 1 zu verschließenden Raumes angeordnet als das ortsfeste Hauptlager 6 der Schwinge 4.

In der Schließstellung der Schürze bzw. der Abdeckung 1 liegt der Mitnehmerzapfen 11 von der Schwinge 4 beabstandet unterhalb der Schwinge 4. Das Lager 12 des Koppelhebels 8 an der Antriebskurbel 9 ist oberhalb der Schwinge 4 angeordnet.

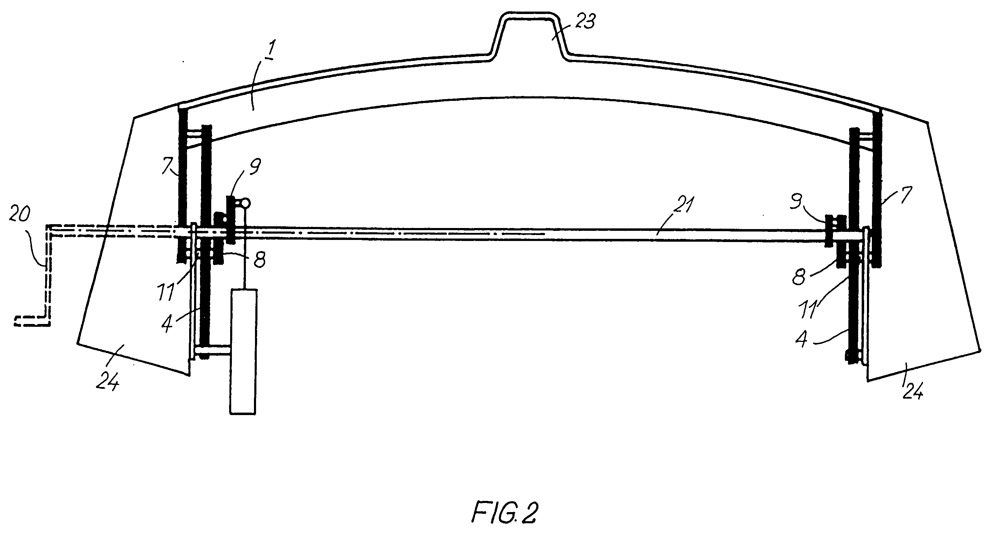

Die Betätigung der Abdeckung 1 kann auch über eine Handkurbel 20 erfolgen, die lösbar an einer Antriebswelle 21 angeordnet ist, welche die Hauptlager 10 der beiden Antriebskurbeln 9 der Abdeckung 1 verbindet, wie aus Fig. 2 zu ersehen ist. Zwischen der Handkurbel 20 und der Antriebswelle 21 kann ein Untersetzungsgetriebe (nicht dargestellt) angeordnet werden.

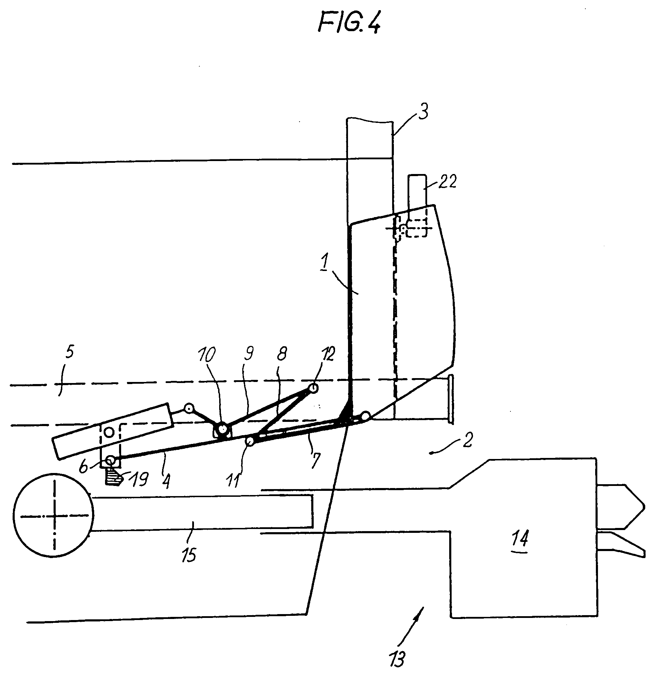

Das Öffnen der Raumöffnung 2 erfolgt in zwei Phasen: Zunächst wird die Abdeckung um das Lager 17 an der Schwinge 4 verschwenkt, wodurch über die Schwingkurbel 7 die Abdeckung 1 verschwenkt und nach vorne (weg von der Stirnwand des Fahrzeuges) gekippt wird. Das Wegkippen der Schürze von der Öffnung bzw. der Stirnwand des Fahrzeuges erlaubt die Freigabe einer eventuell vorgesehenen Wagenhebevorrichtung, damit der Kran eines Einsatzfahrzeuges an der Wagenhebevorrichtung mit seinem Seil eingreifen kann, um das Straßenbahnfahrzeug vorne anzuheben. Die erste Phase wird durch Anschlag des Mitnehmerzapfens 11 an der Schwinge 4 beendet. Der Antrieb, der an der Schwingkurbel 7 der Schürze angreift, bewegt in der zweiten Phase die Schwinge 4 im Sinne einer Drehung um ihr ortsfestes Lager 6, wodurch die Schwinge 6 bis zu der in Fig. 4 gezeigten Stellung hochgeschwenkt wird. Die Lage der einzelnen Glieder der Betätigungskinematik für die Abdeckung 1 bei Beendigung der ersten Bewegungsphase ist aus Fig. 3 ersichtlich.

In der hochgeschwenkten Lage gibt die Abdeckung 1 die Raumöffnung 2 vollständig frei. Die Abdeckung 1 kann mit einer Nase 23 versehen werden, wenn das Fahrzeug mittig mit einer Wagenhebevorrichtung (Stummel) versehen ist, in welche das Seil eines Kranes zum raschen Anheben des Fahrzeuges eingehängt werden kann.

Die seitlichen Flügel sind in Fig. 2 mit 24 bezeichnet. Diese Flügel können, wie eingangs erwähnt, um ein (nicht dargestelltes) Scharnier verschwenkt werden. Die Schwenkbewegung der Flügel 24 wird durch Anschlagen der Kupplung 13 an den jeweiligen Flügel 24 und weiteres Schwenken der Kupplung bewirkt.

## Patentansprüche

1. Einrichtung zur schwenkbaren Befestigung und Betätigung einer Abdeckung (1), insbesondere Schürze, für die Öffnung (2) eines Raumes, insbesondere einer Öffnung in der Wand, z.B. der Stirnwand, eines Fahrzeuges, vorzugsweise eines Straßen- oder Stadtbahnfahrzeuges, wobei die Abdeckung (1) schwenkbar an einer Schwinge (4), insbesondere an einem Ende der Schwinge (4), gelagert ist und die Schwinge (4) ihrerseits, insbesondere an ihrem anderen Ende, schwenkbar in einem bezüglich des Raumes ortsfesten, z.B. an einem Rahmenholm (5) des Fahrzeuges angeordneten Lager (6) gelagert ist, wobei weiters mit der Abdeckung (1) ein Hebel (7) verbunden ist, an dem ein Antrieb zur Betätigung der Abdeckung (1) angreift, der bevorzugt von einer Antriebskurbel (9) gebildet ist, die in einem bezüglich des Raumes ortsfesten, z.B. an einem Rahmenholm (5) des Fahrzeuges angeordneten Hauptlager (10) schwenkbar gelagert ist, dadurch gekennzeichnet, daß der Hebel (7) mit der Abdeckung (1) starr verbunden ist und dieser Hebel (7) oder ein an dem Hebel (7) angelenkter, mit dem Antrieb verbundener Koppelhebel (8) mit einem Mitnehmerzapfen (11) versehen ist und die Bahn des Mitnehmerzapfens (11) die Schwinge (4), an der die Abdeckung (1) schwenkbar gelagert ist, schneidet, wodurch nach Auftreffen des Mitnehmerzapfens (11) auf die Schwinge (4) die Schwinge (4) um ihr bezüglich des Raumes ortsfestes Lager (6) gemeinsam mit der Abdeckung (1) durch die Bewegung des Mitnehmerzapfens (11) verschwenkt wird.

2. Einrichtung nach Anspruch 1, bei der das ortsfeste Hauptlager (10) der Antriebskurbel (9) näher zur Öffnung (2) des durch die Abdeckung (1) zu verschließenden Raumes angeordnet ist, als das ortsfeste Hauptlager (6) der Schwinge (4), an der die Abdeckung (1) schwenkbar gelagert ist, dadurch gekennzeichnet, daß in der Schließstellung der Abdeckung (1) der Mitnehmerzapfen (11) unterhalb der Schwinge (4), von dieser beabstandet, angeordnet ist und daß gegebenenfalls das Lager (12), über welches der Koppelhebel (8) an der Antriebskurbel (9) angelenkt ist, oberhalb der Schwinge (4) angeordnet ist.

3. Fahrzeug, insbesondere Schienenfahrzeug mit einer Einrichtung nach einem der Ansprüche 1 und 2, dadurch gekennzeichnet, daß aus den Seitenwänden des Fahrzeuges, im Bereich der Schwenkbahn einer in dem von der Schürze (1) verschließbaren Raum (2) gelagerten Kupplung (13) Flügel (24) schwenkbar, insbesondere um eine vertikale Scharnierachse, ausdrehbar sind und daß gegebenenfalls die Flügel (24) unter dem Einfluß einer Feder in der Geschlossenstellung, in welcher sie mit den Seitenwänden des Fahrzeuges fluchten, gehalten sind, und daß bevorzugt durch Anlaufen der Kupplung (13) an die Flügeln (24) diese aus ihrer Geschlossenstellung ausschwenkbar sind.

## Claims

1. A device for swivellably fastening and operating a cover (1), in particular an apron, for the opening (2) of a room, in particular an opening in the wall, e.g. the end wall, of a vehicle, preferably a tramway or urban railway vehicle, with the cover (1) being held swivellably on an oscillating link (4), in particulary at one end of the oscillating link (4), and the oscillating link (4) on its part, particularly at its other end, is swivellably held in a bearing (6) which is arranged with respect to the room stationary, for example in a chassis spar (5) of the vehicle with a lever (7) furthermore being connected with the cover (1) on which lever there acts a drive for operating the cover (1) which drive is preferably formed by a driving crank (9) which is swivellably held in a main bearing (10) which is arranged with respect to the room stationary, for example in said chassis spar (5) of the vehicle, characterized in that the lever (7) is rigidly connected with the cover (1) and said lever (7), or a coupling lever (8) which is articulated on the lever (7) and connected with the drive, is provided with a driving pin (11) and the path of the driving pin (11) intersects with the oscillating link (4) on which the cover (1) is swivellably held, as a result of which the oscillating link (4) is swivelled about the bearing (6), which with respect to the room is stationary, jointly with the cover (1) by the movement of the driving pin (11) following the impingement of the driving pin (11) on the oscillating link (4).

2. A device as claimed in claim 1, in which the stationary main bearing (10) of the driving crank (9) is arranged closer to the opening (2) of the room to be closed by the cover (1) than the stationary main bearing (6) of the oscillating link (4) on which the cover is swivellably held, characterized in that in the closed position of the cover (1) the driving pin (11) is arranged below the oscillating crank (4) at a distance from the same and that optionally the bearing (12) through which the coupling lever (8) is articulated on the driving crank (9) is arranged above the oscillating crank (4).

3. A vehicle, in particular a railway vehicle with a device as claimed in one of the claims 1 and 2, characterized in that from the side walls of the vehicle wings are swivellable, and in particular can turn about a vertical hinge axis, in the zone of a swivelling path of a coupling (13) mounted in the room (2) which can be closed by the apron (1) and that optionally the wings (24) are held under the influence of a spring in the closed position in which they are flush with the side walls of the vehicle and that preferably the wings can be swivelled out from their closed position by the coupling (13) running up against the wings (24).

## Revendications

1. Dispositif pour la fixation pivotante et l'actionnement d'un couvercle (1), en particulier un tablier, pour l'ouverture (2) d'un espace en particulier une ouverture dans la paroi, par exemple la paroi avant, d'un véhicule, de préférence un tram ou un véhicule de métro, le couvercle (1) étant logé de façon pivotante sur une coulisse (4) en particulier sur une extrémité de la coulisse (4), et la coulisse (4) étant logée pour sa part, en particulier sur son autre extrémité, de façon pivotante dans un palier (6) fixe par rapport à l'espace, par exemple sur un longeron de cadre (5) du véhicule, un levier (7) étant également relié au couvercle (1), levier sur lequel est appliqué un entraînement pour la commande du couvercle (1), qui est formé de préférence d'une manivelle de commande (9) qui est logée de façon pivotante dans un palier principal (10), disposé de façon fixe par rapport à l'espace, par exemple sur le longeron de cadre (5) du véhicule, caractérisé en ce que le levier (7) est relié de façon rigide au couvercle (1) et ce levier (7) ou un levier de couplage (8) articulé sur le levier (7) et relié à l'entraînement est pourvu d'un tenon d'entraînement (11) et la trajectoire du tenon d'entraînement (11) recoupe la coulisse (4), sur laquelle le couvercle (1) est logé de façon pivotante, ce qui fait que, après l'impact du tenon d'entraînement (11) sur la coulisse (4), la coulisse (4) est basculée autour de son palier (6) fixe par rapport à l'espace conjointement avec le couvercle (1) sous l'effet du mouvement du tenon d'entraînement (11).

2. Dispositif selon la revendication 1, sur lequel le palier principal (10) fixe de la manivelle d'entraînement (9) est disposé plus près de l'ouverture (2) de l'espace à obturer par le couvercle (1) que le palier principal (6) fixe de la coulisse (4), sur laquelle le couvercle (1) est logé de façon pivotante, caractérisé en ce que, dans la position de fermeture du couvercle (1), le tenon d'entraînement (11) est disposé au-dessous de la coulisse (4), à une certaine distance de celle-ci, et en ce qu'éventuellement le palier (12), par lequel le levier de couplage (8) est articulé sur la manivelle d'entraînement (9), est disposé au-dessus de la coulisse (4).

3. Véhicule, en particulier véhicule sur rail avec un dispositif selon l'une des revendications 1 et 2, caractérisé en ce que, à partir des parois latérales du véhicule, en particulier dans la zone de la trajectoire de pivotement d'un couplage (13) logé dans l'espace (2) obturable par le tablier (1), des ailes (24) peuvent être basculées, en particulier orientées autour d'un axe à charnière vertical, et en ce qu'éventuellement les ailes (24) sont maintenues sous l'influence d'un ressort dans la position fermée, dans laquelle elles sont alignées avec les parois latérales du véhicule, et en ce que les ailes peuvent être basculées à partir de leur position fermée de préférence sous l'effet de la butée du couplage (13) sur les ailes (24).
